# FASCICULE DE BREVET EUROPEEN

(11) **EP 3 686 761 B1**
(45) Date de publication et mention de la délivrance du brevet: **01.12.2021**
(21) Numéro de dépôt: 20153531.7
(22) Date de dépôt: 24.01.2020
(51) Int. Cl.: G06F 21/30, H04L 9/32, H04L 29/06, H04W 12/06, G06K 7/14, G06K 19/06, H04W 12/77

(54) **ÉLÉMENT DE MARQUAGE SÉCURISÉ ET PROCÉDÉS D'ENCODAGE ET D'AUTHENTIFICATION DUDIT ÉLÉMENT DE MARQUAGE**
GESICHERTES MARKIERUNGSELEMENT UND KODIERUNGS- UND AUTHENTIFIZIERUNGSVERFAHREN DIESES MARKIERUNGSELEMENTS
SECURE MARKING ELEMENT AND METHODS FOR ENCODING AND AUTHENTICATING SAID MARKING ELEMENT

(30) Priorité: 25.01.2019 FR 1900671
(43) Date de publication de la demande: 29.07.2020
(73) Titulaire: MSP - Media Services Partners, 33450 Saint-Loubes (FR)
(72) Inventeur: ESCAT, Frédéric, 33370 POMPIGNAC (FR); SERRURIER, Mathieu, 33370 TRESSES (FR); SALINAS, Pierre, 33450 IZON (FR)
(74) Mandataire: Aupetit, Muriel J. C.

(56) Documents cités:
- EP-A1- 3 252 680
- US-A1- 2011 002 012
- US-A1- 2018 197 053
- US-B1- 8 297 510

## Description

L'invention concerne le domaine des éléments de marquage et d'authentification d'objets manufacturés ou d'emballages d'objets, en particulier les éléments de marquage dotés d'un code-barres à deux dimensions.

Un code-barres à deux dimensions du type QR code ou Datamatrix est formé d'une matrice constituée de symboles graphiques sombres et clairs juxtaposés, et permet d'intégrer une grande quantité d'informations.

Un code-barres à deux dimensions, ci-après dénommé code 2D, est généralement associé directement à l'objet manufacturé ou sur un emballage ou sur tout support compatible pour apposer ce code-barres, notamment par impression graphique, le support comme par exemple une étiquette étant destiné à être associé à l'objet à marquer. Le code-barres à deux dimensions est lu grâce à un capteur de code graphique, comme par exemple un scanner, un appareil photo, une caméra vidéo...

Lorsqu'un consommateur souhaite des informations sur l'objet doté de l'élément de marquage avec un code 2D du type QR code, il photographie généralement le code 2D avec un smartphone via une application de lecture native ou dédiée, ce qui le dirige directement vers une page Internet dont l'adresse URLcorrespond à celle associée au code 2D. L'utilisateur trouve en instantané sur la page Internet des informations utiles sur l'objet ou en relation avec l'objet porteur du code 2D.

Toutefois, au-delà de simples informations sur l'objet/le produit, le consommateur souhaite de plus en plus s'assurer que le produit qu'il est prêt à acheter est un produit authentique et non une contrefaçon. Aussi, les fabricants et/ou distributeurs ont un besoin grandissant d'avoir à disposition des codes 2D qui soient sécurisés, infalsifiables, et permettant à un protagoniste de la chaîne de distribution jusqu'à l'utilisateur final, de s'assurer que le code 2D renverra par interrogation une réponse certaine d'authentification des données liées à ce code 2D.

Afin de pouvoir authentifier un objet porteur d'un marquage sous la forme d'un code 2D, il est connu d'associer à ce marquage une signature visible cryptée qui ne peut être authentifiée que par un dispositif d'authentification recevant des demandes d'authentification par la lecture de la signature, et générant une réponse basée sur les informations stockées dans le dispositif d'authentification. C'est par exemple le marquage décrit dans le document US2018/197053. Cependant, un tel dispositif d'authentification n'est en général accessible qu'à un groupe donné de personnes, et non à n'importe quel tiers comme le grand public tel que les consommateurs. En outre, il est toujours souhaitable de consolider encore davantage les moyens de sécurisation des codes 2D.

L'invention a donc pour but de proposer un élément de marquage sécurisé comportant un code 2D, qui non seulement procure des informations relatives à l'objet auquel est destiné à être associé l'élément de marquage, mais également procure une authentification fiable de l'objet. De plus, l'élément de marquage de l'invention est tel qu'une fois imprimé, sa photocopie ne peut pas conduire à l'élément de marquage à l'identique.

Dans la suite de la description, on définit par « imprimé » ou « apposé », l'opération de rendre solidaire l'élément de marquage à un objet à marquer, directement sur ledit objet ou indirectement via un support ou un accessoire d'interface.

On entend dans la suite de la description par « objet », un objet manufacturé ou tout support sur lequel sera apposé l'élément de marquage et associé à l'objet manufacturé.

L'élément de marquage sécurisé de l'invention est conforme à la revendication 1.

Les éléments graphiques en différant en taille et en forme géométrique procure un agencement des éléments graphiques unique de chaque élément de marquage sécurisé.

On entend dans la suite de la description par « quasi-invisible » ou le qualificatif « de trop petit pour être visible à l'œil nu », le fait de devoir utiliser une loupe ou un appareil avec une fonction de zoom pour être visible.

Lorsque la signature est invisible, elle est avantageusement obtenue grâce à une encre invisible lorsque l'élément de marquage est imprimé.

Par conséquent, l'élément de marquage sécurisé procure à partir d'un code 2D des informations relatives à l'objet portant le code 2D, mais également permet d'assurer une authentification sécurisée de l'objet, la photocopie ou la reproduction par numérisation puis impression du code 2D empêchant systématiquement la reproduction des signatures de codage invisibles ou quasi-invisibles qui sont uniquement aptes à être révélées par un dispositif adapté à les rendre visibles. En outre, l'agencement et la répartition des éléments graphiques en ayant été établis à partir d'une clé de cryptage, ceci impose pour s'assurer de l'authenticité de la signature, d'au moins identifier la clé de cryptage, de décrypter le code 2D crypté à partir de la clé, et d'analyser si la signature imprimée et lue après avoir été rendue visible correspond à la signature authentique initialement générée.

L'authentification de la ou des signatures se fait par des moyens de traitement et de décodage appropriés accessibles de préférence à partir d'une plateforme web dite de décryptage qui est connectée à un serveur hébergeant lesdits moyens de traitement et de décodage.

L'élément de marquage sécurisé est destiné à être imprimé graphiquement sur tout support qui est adapté d'une part à l'impression, tel que papier, carton, matière plastique, etc., et d'autre part à sa solidarisation à un objet à identifier, ou bien encore peut être directement imprimable sur l'objet selon son matériau constitutif (et éventuellement sa forme). En outre, la couleur et/ou la nature du support d'impression doit être adaptée par rapport à l'encre d'impression nécessaire pour imprimer la ou les signatures d'authentification.

On entend par « impression », tout type d'apposition compatible avec la surface de l'objet ou la surface du support à associer à l'objet, l'impression est par exemple une impression graphique, une gravure, une sérigraphie, etc., avec une encre quasi-invisible ou invisible qui ne se révèle que par visualisation d'une photographie prise de l'élément de marquage dotée de la ou des signatures, ou par mise en présence de l'élément de marquage sous une lumière ultraviolette.

Selon une caractéristique, le code 2D stocke une adresse URL et un identifiant se présentant sous la forme d'une chaîne de caractères, ledit identifiant permettant dans une base de données sécurisée d'identifier (d'aller chercher de manière automatisée) ladite au moins première clé de cryptage. De manière optionnelle, l'identifiant peut en outre être destiné à être imprimé à proximité de l'élément de marquage et être visible et lisible ; cette variante avec l'identifiant visible pourra trouver son utilité dans certaines applications.

Selon une autre caractéristique préférée, l'élément de marquage comporte deux signatures d'authentification, une première signature d'authentification ayant été générée à partir d'une première clé de cryptage et du code 2D non crypté, et la seconde signature d'authentification ayant été générée à partir d'une seconde clé de cryptage et du code 2D non crypté, la seconde clé de cryptage étant reliée à la première clé de cryptage de sorte que la seconde clé de cryptage n'est identifiable qu'en ayant d'abord identifié la première clé de cryptage lorsqu'il s'agit d'authentifier l'élément de marquage.

De préférence, l'élément de marquage comporte au moins deux signatures d'authentification, la première signature étant invisible à l'œil nu ou trop petite pour être visible à l'œil nu, et la seconde signature étant invisible à l'œil nu, chaque signature d'authentification étant destinée à être révélée par un dispositif de lecture distinct quant au mode de révélation, en particulier l'un des modes de révélation est la prise d'une photographie de l'élément de marquage en zoomant ensuite sur la photographie, tandis qu'un autre mode est l'agencement de l'élément de marquage sous une lumière ultraviolette.

La ou les signatures d'authentification sont destinées à être imprimées à partir d'une encre dont la couleur rend la signature quasi-invisible ou invisible par rapport à la couleur du support sur lequel est apposé l'élément de marquage, et/ou d'une encre invisible et détectable (apte à être révélée) par prise d'image photographique, et/ou par mise en lumière sous rayonnements ultraviolets, le dispositif de révélation étant un appareil de prise d'image photographique et/ou un dispositif d'émission de rayonnements ultraviolets.

Selon une autre caractéristique, chaque signature d'authentification est obtenue par un algorithme de calcul qui part d'une clé de cryptage et du code 2D non crypté et génère une signature d'authentification unique. Selon l'invention, l'algorithme n'effectue pas un résultat de signature aléatoire mais déterminé et unique.

Chacune des signatures comporte des éléments graphiques qui sont distincts des symboles graphiques (du type carrés) sombres du code 2D et sont agencés exclusivement dans des zones claires du code 2D, en particulier à l'intérieur des symboles (carrés) blancs.

De préférence, la ou les signatures d'authentification sont constituées d'une encre restant invisible lorsque l'élément de marquage est photocopié.

Avantageusement, l'élément de marquage comporte en outre une étiquette électronique telle qu'une puce RFID, permettant une traçabilité de l'objet (ce qui est en particulier utile dans la chaîne de fabrication et de distribution) et une protection de la puce RFID par appairage des deux.

L'invention est également relative à un procédé de génération de l'élément de marquage sécurisé précité de l'invention, le procédé comportant les étapes suivantes qui sont mises en œuvre par un système d'encodage contenu sur un serveur sécurisé apte à stocker en outre une base de données :
- à chaque client voulant au moins un élément de marquage sécurisé de l'invention pour apposer sur ses objets, est créée/encodée au moins une première clé de cryptage unique par client, et une seconde clé de cryptage pour chaque objet ou chaque lot d'objets, la seconde clé de cryptage étant liée à la première clé de cryptage,
- à l'aide d'un ou de plusieurs algorithmes mathématiques spécialement conçus selon l'invention, sont encodés avec la première clé et éventuellement la seconde clé si elle existe, les éléments graphiques de la première signature et éventuellement de la seconde signature qui seront destinés à être imprimés dans les zones claires du code 2D, selon un nombre déterminé et une répartition spécifique par signature,
- est généré un code (sous la forme d'une chaîne de caractères ASCII) pour fournir un code 2D non crypté,
- le code 2D non crypté est crypté avec la première clé de cryptage pour générer un code 2D crypté (uniquement avec la première clé de cryptage dans le mode de réalisation préféré),
- le code 2D crypté est concaténé pour construire une adresse URL intégrant en outre un identifiant (sous la forme d'une chaîne de caractères) qui est destiné à permettre de retrouver la première clé de cryptage lors d'une authentification ultérieure de l'élément de marquage (l'identifiant permet dans la base de données de retrouver la première clé de cryptage), de préférence le code 2D étant généré avec un niveau de correction M (M pour « médium ), et
- est généré sous format électronique l'élément de marquage sécurisé tel qu'il sera à apposer, ledit élément de marquage sécurisé comprenant d'une part le code 2D crypté stockant l'adresse URL et l'identifiant, et d'autre part la ou les signatures.

Une fois le code 2D crypté généré et stockant une adresse URL, un identifiant et les signatures, il constitue l'élément de marquage sécurisé sous format électronique. L'élément de marquage sécurisé est enregistré/stocké sur tout support électronique approprié afin de pouvoir être imprimé.

L'invention est enfin relative à un procédé d'authentification de l'élément de marquage précité de l'invention une fois apposé sur un objet, le procédé comportant les étapes de :
- l'envoi d'une image (la photographie/la prise de vue) de l'élément de marquage imprimé avec la ou les signatures d'authentification rendues visibles par le ou les dispositifs de révélation, à un serveur sécurisé doté de moyens de traitement et de décodage, en particulier en se connectant lors de la lecture du code 2D crypté de l'élément de marquage à une adresse URL qui est incluse dans le code 2D crypté et qui est en connexion avec le serveur,
- l'analyse du code 2D crypté de l'élément de marquage pour lire l'identifiant stocké dans ledit code 2D (en particulier contenu dans l'adresse URL encodée),
- l'obtention dans une base de données sécurisée du serveur d'au moins une première clé de cryptage à partir de la reconnaissance de l'identifiant,
- l'analyse de la ou des signatures d'authentification de l'image de l'élément de marquage en identifiant au moins le nombre et l'agencement des éléments graphiques rendus visibles dans les symboles clairs du code 2D crypté,
- le décryptage à partir de la première clé de cryptage, (de l'image) du code 2D crypté pour fournir un code 2D décrypté (sans présence de la ou les signatures),
- le calcul, via un algorithme dédié, d'au moins une signature théorique d'authentification à partir du code 2D décrypté et de la première clé de cryptage et éventuellement d'une seconde signature théorique à partir d'une seconde clé de cryptage fournie par le serveur et dépendante de la première clé de cryptage,
- la comparaison de la ou des signatures théoriques à la ou les signatures de l'image de l'élément de marquage, l'authentification étant positive lorsque qu'au moins un certain pourcentage de coïncidence entre les éléments graphiques de la (chaque) signature théorique (et non celle initialement stockée dans la base de données pour impression) et ceux de l'image est atteint.

L'utilisation d'un identifiant afin que les moyens de traitement et de décodage accèdent à la première clé de cryptage uniquement à partir de la base de données sécurisée plutôt que de délivrer directement la clé de cryptage à l'utilisateur sécurise l'authentification. De plus, faire dépendre la seconde clé de cryptage de la première renforce encore la sécurité. Enfin, la particularité selon l'invention de refaire un calcul théorique des éléments graphiques à partir des clés de cryptage pour les comparer aux éléments figuratifs visibles une fois photographiés, sécurise encore davantage l'authentification, plutôt que de réaliser une comparaison immédiate par superposition d'images entre la photographie et le code 2D doté des éléments graphiques et stocké dans la base de données lorsqu'il a été initialement créé.

La présente invention est maintenant décrite à l'aide d'exemples uniquement illustratifs et nullement limitatifs de la portée de l'invention, et à partir des illustrations jointes, dans lesquelles :
La figure 1 représente un exemple de réalisation d'un élément de marquage sécurisé une fois imprimé selon l'invention sous la forme d'un QR code et d'un identifiant qui est optionnellement imprimé.
La figure 2 représente une photographie de l'élément de marquage sécurisé de la figure 1 (sans identifiant), une première signature d'authentification schématisée par des cercles et ayant été rendue visible par la seule prise de vue et un zoom sur la photographie.
La figure 3 représente une prise de vue de l'élément de marquage sécurisé de la figure 1 (sans identifiant), montrant la première signature et une seconde signature d'authentification rendue visible sous lumière ultraviolette et schématisée par des points entourés d'un cercle.
La figure 4 représente un autre exemple de réalisation d'un élément de marquage sécurisé une fois imprimé selon l'invention sous la forme d'un Datamatrix.

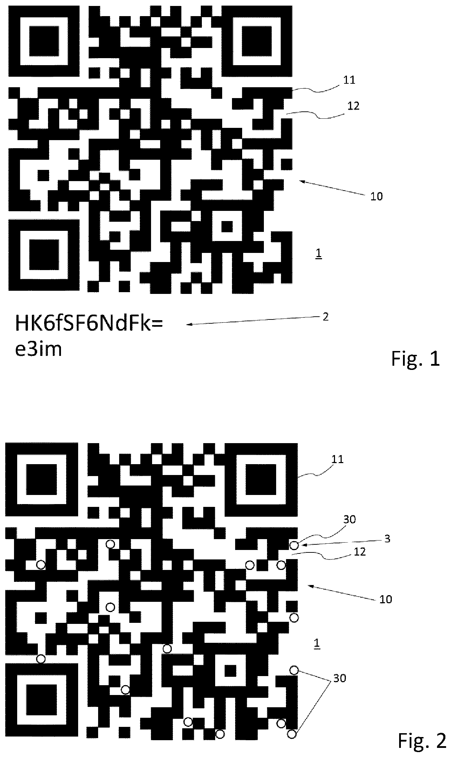

L'élément de marquage et d'authentification sécurisé 1 de l'invention, ci-après dénommé l'élément de marquage sécurisé ou élément de marquage, illustré sur les figures 1 à 3 comporte un code-barres à deux dimensions 10, ci-après dénommé code 2D, et au moins un élément d'identification 2, ci-après dénommé identifiant, qui permettra de décrypter le code 2D pour l'authentifier. L'élément de marquage et d'authentification 1 est selon l'invention sécurisé ou crypté, c'est-à-dire qu'il contient des informations ne pouvant être reconnues que par un dispositif de lecture adapté et des moyens de traitement et de décodage dédiés aptes à déterminer si l'élément de marquage est authentique ou non.

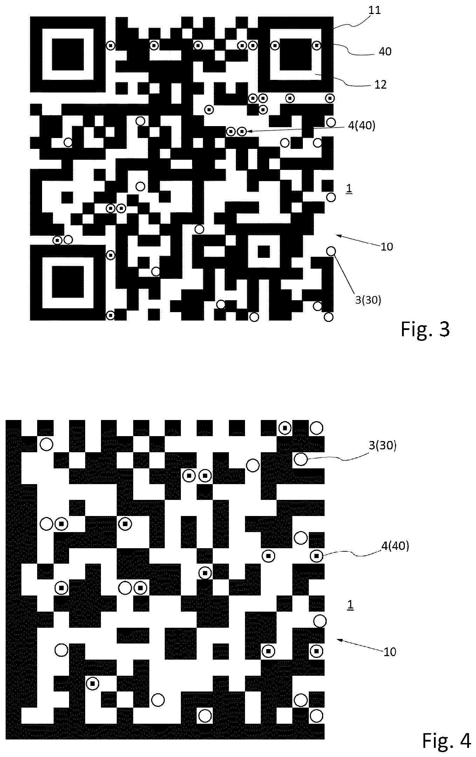

Selon l'invention, l'élément de marquage crypté 1 a été crypté à l'aide d'au moins une clé de cryptage, et comporte en sus du code 2D 10 et de l'identifiant 2, au moins une signature d'authentification, de préférence deux signatures d'authentification 3 et 4 qui sont invisibles à l'œil nu (figure 1) et rendues visibles (figures 2 et 3) par un dispositif de lecture approprié. Les moyens de décodage permettront de savoir si chaque signature est authentique, c'est-à-dire correspond à celle initialement générée comme il sera expliqué plus loin.

Chaque signature d'authentification 3, 4 est dépendante d'une clé de cryptage et du code 2D non crypté. On entend par « dépendante d'une clé de cryptage et du code 2D non crypté », le fait que la signature a été générée en partant de la clé de cryptage et du code 2D non crypté, et grâce à un algorithme mathématique spécifiquement conçu pour donner à la signature ses caractéristiques particulières et uniques. Du fait que la signature d'authentification dépend d'au moins une clé de cryptage et du code 2D non crypté, l'authentification ne peut se faire qu'en ayant décrypté tout d'abord le code 2D crypté puis identifié la clé, ce qui ne peut être réalisé que par les moyens de de traitement et de décodage spécifiques pour ensuite vérifier si la signature de l'élément de marquage sécurisé coïncide avec la signature initiale générée.

En outre, selon l'invention, la ou les signatures d'authentification 3 et 4 sont intégrées dans le code 2D 10, en particulier disposées dans les zones claires du code 2D.

Le code 2D 10 est par exemple un QRcode comprenant une multiplicité de symboles graphiques tels que des carrés, d'une part sombres 11, par exemple noir, et d'autre part clairs 12 par exemple blancs. Les symboles sombres et clairs sont juxtaposés d'une certaine façon pour correspondre à une information donnée, telle qu'une adresse URL.

L'utilisateur, en se connectant à l'adresse URL après avoir scanné le code 2D, pourra savoir si l'objet est authentique grâce aux moyens de traitement et de décodage de données dont le fonctionnement sera décrit plus loin, lesdits moyens de traitement et de décodage étant aptes à lire et traiter l'ensemble de l'élément de marquage sécurisé comprenant le code 2D 10, l'identifiant 2 et les signatures d'authentification 3 et 4 pour décrypter l'élément de marquage et fournir une réponse à l'utilisateur lui indiquant si l'objet est bien authentique ou non.

Dans le cas de l'authenticité avérée, l'utilisateur pourra poursuivre sa lecture des informations accessibles sur l'adresse URL et considérées alors comme authentiques, ou bien à partir du site Internet sur lequel l'authentification a pu se faire, avoir accès sur le même site ou par redirection sur un autre site à des informations liées à l'objet. En variante, l'affichage des informations liées à l'objet pourra être immédiat et l'authentification sera réalisée dans un second temps.

L'invention porte également sur un procédé de génération de l'élément de marquage sécurisé grâce à des moyens de traitement et d'encodage et une base de données, et un procédé d'authentification de l'élément de marquage sécurisé grâce aux moyens de traitement et de décodage. Les moyens de traitement, d'encodage et de décodage et la base de données sont hébergés par un serveur sécurisé sur lequel se connecte l'utilisateur lorsqu'il s'agit d'authentifier un objet portant l'élément de marquage sécurisé 1 de l'invention.

Selon l'invention, dans une variante préférée, l'élément de marquage 1 comporte le code 2D 10, l'identifiant 2 (qui est imprimable optionnellement) et les deux signatures d'authentification 3 et 4, lesdites signatures d'authentification étant quasi-invisible pour la première et invisible à l'œil nu pour la seconde, en sortie d'impression de l'élément de marquage et ne devenant visibles qu'à partir de moyens de lecture appropriés. L'authentification des deux signatures se fait par les moyens de traitement et de décodage à partir de la lecture de l'image de l'élément de marquage qui constitue un code 2D crypté et de sa transmission auxdits moyens de traitement et de décodage.

L'élément de marquage imprimé comprend le code 2D 10 et les deux signatures 3 et 4. Le code 2D 10 stocke comme données une adresse URL et l'identifiant 2. Selon les applications, l'identifiant 2 qui est stocké dans le code 2D peut ou pas être en outre imprimé visiblement et lisiblement à proximité du code 2D comme illustré sur la figure 1. L'identifiant 2 est une suite de caractères, par exemple se présentant sous la forme de caractères choisis dans le code ASCII. L'identifiant 2 permet l'identification de la première clé de cryptage qui est stockée de manière sécurisée dans la base de données. Cet identifiant permet aux moyens de traitement et de décodage de retrouver/d'identifier la première clé de cryptage en vue ensuite de décrypter le code 2D, de (re)calculer la première signature dépendante de la première clé et à partir du code 2D décrypté, et d'établir si cette signature recalculée correspond à celle générée/calculée initialement et visible sur l'image de l'élément de marquage à authentifier. De plus, selon l'invention, la seconde clé de cryptage est associée à la première clé de cryptage, c'est-à-dire que la seconde clé de cryptage n'est accessible qu'en ayant identifié la première clé de cryptage ; les moyens de décodage sont aptes à décoder la seconde clé de cryptage identifiée, à recalculer la seconde signature associée à cette seconde clé de cryptage et au code 2D décrypté, et à établir si cette seconde signature recalculée correspond à celle générée/calculée initialement et ressortant de l'image/la photographie de l'élément de marquage à authentifier.

Le serveur sécurisé stocke des tables de données, l'une des tables comprenant des identifiants 2 à chacun desquels correspond une première clé de cryptage qui est à son tour reliée à une seconde clé de cryptage. Les clés de cryptage sont donc internes au serveur et inaccessibles depuis l'extérieur du serveur.

Chaque clé de cryptage correspond à une information en rapport avec l'objet manufacturé sur lequel est apposé l'élément de marquage, notamment une information concernant le fabricant de l'objet et/ou le concepteur de l'objet et/ou le propriétaire ayant généré l'élément de marquage et/ou l'objet (tel que sa nature) et/ou un ensemble d'objets tel qu'un lot de fabrication d'objets.

A titre d'exemple nullement limitatif :

La première clé de cryptage est attribuée pour un nom donné de fabricant d'objets manufacturés ; ainsi le gestionnaire du serveur qui génère les codes 2D cryptés attribue une première clé de cryptage qui est différente selon chacun de ses clients, chaque client correspondant par exemple à un fabricant d'objets manufacturés destinés à porter le code 2D crypté. Le code 2D crypté pourra être apposé sur chaque objet et/ou sur un lot d'objets tel qu'un emballage ou un contenant logeant les objets.

La seconde clé cryptée est attribuée à une référence/une identification d'un lot d'objets.

Chaque clé de cryptage est une suite de caractères choisis dans le code ASCII.

Selon l'invention, à chaque clé de cryptage a été combinée une signature d'authentification respective 3, 4. Chaque signature 3, 4 est composée d'éléments graphiques, respectivement 30, 40.

La première signature d'authentification 3 est quasi-invisible à l'œil nu et est conçue pour n'apparaître visuellement à l'œil nu, que sur une photographie du code 2D imprimé après l'avoir scanné ou photographié et après avoir zoomé. Cette première signature 3 est par exemple imprimée avec une encre jaune (visible) sur un support à fond clair. Dans l'exemple de l'invention, les éléments graphiques 30 de la première signature 3 se présentent sous la forme de points jaunes, qui sont schématiquement illustrés par des cercles sur la figure 2. Les points jaunes sont si petits, qu'ils ne sont pas visibles/détectables à l'œil nu. Pour rendre les points jaunes visibles, l'utilisateur peut par exemple scanner (photographier) l'élément de marquage via son smartphone. Si les points jaunes apparaissent sur la photographie prise et zoomée, l'utilisateur peut supposer que l'élément de marquage 1, et donc l'objet associé, sont authentiques. Toutefois, l'utilisateur n'en n'aura la certitude qu'après traitement et décodage du code 2D crypté 10 et de son identifiant 2 pour s'assurer que la première signature 3 est bien authentique, c'est-à-dire que cette première signature 3 (points jaunes et leurs caractéristiques techniques) qui a été générée/imprimée sur l'objet est bien celle correspondant à la signature générée initialement par les moyens de traitement et d'encodage du serveur à partir de la première clé de cryptage stockée sur le serveur.

La seconde signature 4 est invisible et conçue pour n'apparaître qu'à l'aide d'un dispositif de lecture approprié, distinct d'un capteur photographique. De préférence, la seconde signature est faite d'une encre invisible qui se révèle sous rayonnement ultra-violet. L'utilisateur doit disposer d'une lampe à ultra-violets pour rendre visible la signature. Une fois la signature rendue visible, par exemple sous la forme de points dont la couleur est de préférence d'une autre couleur (tel que de couleur bleue) que celle de la première signature (les points de la seconde signature étant schématiquement illustrés sur la figure 3 pour une meilleure compréhension sous la forme de carrés entourés de cercles), l'utilisateur peut supposer que l'élément de marquage 1, et donc l'objet associé, sont authentiques. Toutefois, l'utilisateur n'en n'aura la certitude qu'après traitement et décodage de la seconde clé cryptée qui est liée à la première clé cryptée, elle-même liée à l'identifiant 2. Les moyens de traitement et décodage du serveur permettront de s'assurer que la seconde signature 4 est bien authentique, c'est-à-dire que cette seconde signature 4 (points bleus et leurs caractéristiques techniques) qui a été générée/imprimée sur l'objet est bien celle correspondant à la signature générée initialement par les moyens d'encodage du serveur à partir de la seconde clé de cryptage stockée sur le serveur.

Avantageusement, les signatures 3 et 4 sont constituées d'une encre restant invisible lorsque l'élément de marquage 1 est photocopié. Ainsi, en cas de tentative d'authentification d'un élément de marquage photocopié, les éléments graphiques constituant la signature n'apparaîtront pas sur la photographie une fois prise dudit élément de marquage photocopié.

En regard des figures 2 à 4, les éléments graphiques 30 et 40 de chacune des signatures 3 et 4 sont distincts en couleur des symboles graphiques (du type carrés) sombres 11 et clairs 12 du code 2D. Les éléments graphiques 30 et 40 sont agencés exclusivement dans des zones claires du code 2D, en particulier à l'intérieur des symboles (carrés) blancs 12.

Les éléments graphiques 30 et 40 sont de couleur de préférence différente. Ils sont distribués dans les symboles blancs 12 du code-barres 2D, par exemple sous la forme de points dont le diamètre est inférieur à la section d'un carré blanc 12.

Les éléments graphiques 30 et 40 des signatures d'authentification respectives 3 et 4 sont tels que leurs caractéristiques techniques que sont le nombre, la répartition spatiale et éventuellement la forme et la taille, sont spécifiques. La pluralité d'éléments graphiques 30, 40 forme, par au moins leur nombre et leur répartition spatiale, une signature unique. A chaque code 2D est fournie une combinaison spécifique des éléments graphiques, au moins en nombre et en emplacement, procurant un élément de marquage 1 sécurisé unique.

Le code 2D 10, l'identifiant 2, les clés de cryptage et les signatures d'authentification 3 et 4 sont générés par un procédé de génération propre à l'invention.

Le procédé de génération de l'élément de marquage sécurisé/crypté 1 comporte plusieurs étapes qui sont mises en œuvre par des moyens de traitement et d'encodage, en particulier :
- à chaque client (chaque entité voulant des éléments de marquage sécurisé selon l'invention pour apposer sur ses objets) est créée/encodée une première clé de cryptage unique par client, et une seconde clé de cryptage pour chaque objet ou chaque lot d'objets ;
- à l'aide d'un ou de plusieurs algorithmes mathématiques spécialement conçus selon l'invention, sont encodés avec la première clé et la seconde clé, les éléments graphiques respectivement 30 et 40 (tels que des points) qui seront destinés à être imprimés dans les zones claires 12 du code 2D, selon un nombre déterminé et une répartition spécifique par signature, et qui formeront respectivement la première et la seconde signatures d'authentification. De préférence, un algorithme permet d'engendrer une densité d'éléments graphiques limité selon des seuils bas et haut. Au moins le nombre et la répartition spatiale des éléments graphiques sont spécifiques, en ce sens qu'ils sont uniques pour chaque signature en ayant été élaborés de manière non aléatoire ;
- est généré un code (sous la forme d'une chaîne de caractères ASCII) pour fournir un code 2D non crypté;
- le code 2D non crypté est crypté avec uniquement la première clé de cryptage pour générer un code 2D crypté ;
- le code 2D crypté est concaténé de manière connue pour construire une adresse URL intégrant en outre comme donnée l'identifiant 2, et pour générer une image du code 2D crypté, de préférence avec un niveau de correction M (M pour « médium ), l'élément de marquage sécurisé étant ainsi obtenu sous format électronique en comprenant le code 2D crypté concaténé et les deux signatures.

L'élément de marquage sécurisé 1 est fourni sur tout support électronique approprié afin de pouvoir être imprimé.

L'élément de marquage sécurisé 1 de l'invention qui est crypté et intègre deux signatures distinctes d'authentification (invisibles à l'œil nu) qui sont destinées à être lues par deux moyens distincts de lecture, procure deux niveaux de vérification pour identifier et authentifier un objet doté dudit élément de marquage sécurisé. L'authentification se fera de préférence en se connectant par Internet à une plateforme web connectée au serveur.

Dans un mode de réalisation préféré de l'invention, le premier niveau de vérification est destiné à être utilisé par une personne du grand public souhaitant vérifier que l'objet doté de l'élément de marquage 1 est un produit authentique, et s'il l'est, connaître les informations accessibles au consommateur pour cet objet. L'utilisateur photographie (« flashe ») via l'application de lecture de QR code de son smartphone, l'élément de marquage 1, et peut déjà constater si des points jaunes sont apparus sur la photographie en zoomant. L'application de lecture de QR Code du smartphone se connecte automatiquement à l'adresse URL du code 2D 10. Sur le site Internet de l'adresse URL, l'utilisateur est alors invité à transmettre l'image du code 2D 10, soit via une application mobile, soit directement depuis une plateforme web, à un site Internet d'authentification disposant des moyens de traitement et de décodage pour analyse.

La connexion au site Internet d'authentification disposant des moyens de traitement et de décodage qui sont stockés sur le serveur sécurisé, évite à l'utilisateur de disposer d'une application logicielle spécifique.

Les moyens de traitement et de décodage permettent de délivrer une réponse positive ou négative d'authentification. La plateforme renvoie une réponse à l'utilisateur lui indiquant si l'objet est authentique ou non. A titre d'exemple nullement limitatif, la réponse se présente sous la forme d'une barre de couleur dégradée allant du rouge au vert avec le positionnement d'un curseur indiquant le pourcentage (de 0 à 100%) de reconnaissance/d'authentification de la signature. L'utilisateur a alors la confirmation ou l'infirmation de l'authenticité de l'objet. En cas d'authentification positive, l'utilisateur saura que les informations relatives à l'objet et issues de la plateforme d'authentification ou lues sur un autre site où l'utilisateur aura été redirigé via la plateforme d'authentification, sont bien celles correspondant à l'objet.

Le second niveau de vérification s'adresse à un tiers devant s'identifier de manière sécurisée sur un serveur, par exemple le propriétaire ayant généré l'élément de marquage 1, ou un tiers habilité souhaitant vérifier que l'objet doté de l'élément de marquage 1 est un produit authentique, et obtenir des informations propres au produit qui ne sont accessibles qu'au propriétaire ou au tiers habilité. Un tel exemple concerne par exemple un distributeur dans la chaîne fabrication et de vente d'un objet.

Avec un identifiant et un mot de passe, l'utilisateur se connecte sur une plateforme web de décryptage qui est en connexion avec les moyens de traitement et de décodage. L'utilisateur doit avoir à disposition le dispositif de lecture dédié à la seconde signature. Seul le propriétaire ou le tiers autorisé a connaissance du type de dispositif de lecture apte à lire la seconde signature. L'utilisateur scanne l'élément de marquage sécurisé 1 tout en l'illuminant sous lumière UV au regard du dispositif de lecture dédié; si l'utilisateur constate que les points bleus sont révélés, il poursuit l'opération d'authentification en envoyant la photographie/l'image sur la plateforme de décryptage, ce qui engendre la mise en œuvre des moyens de traitement et de décodage. Si l'authentification est positive, la plateforme le notifie à l'utilisateur et envoie les informations liées au code 2D dont peut disposer le tiers autorisé.

Le lecteur dédié est en particulier un lecteur ultra-violet fonctionnant à une fréquence spécifique.

Les moyens de traitement et de décodage mettent en œuvre le procédé de décodage/décryptage de l'élément de marquage sécurisé 1 de l'invention. Le procédé de décodage comporte notamment les étapes suivantes :
- l'identifiant 2 dans l'adresse URL et stocké dans le code 2D est analysé de manière à aller chercher dans la base de données la première clé de cryptage qui est associée à cet identifiant ;
- l'image de l'élément de marquage imprimé est analysée pour identifier la première signature et éventuellement la seconde signature, c'est-à-dire en identifiant les caractéristiques techniques de chaque signature (nombre et positionnement des points de couleur) ;
- l'élément de marquage sécurisé 1 est décrypté grâce à la première clé de cryptage via un algorithme de décryptage (qui est en rapport avec l'algorithme qui avait permis le cryptage) pour délivrer le code 2D décrypté (code 2D non crypté en clair) ;
- en partant du code 2D décrypté, les moyens de traitement et de codage refont l'algorithme de génération de la première signature à partir de la première clé de cryptage (recalculent la première signature), pour connaître le nombre et la position théoriques des éléments graphiques de la première signature,
- lorsqu'il y a une seconde signature, les moyens de traitement et de codage refont l'algorithme de génération de la seconde signature à partir, d'une part du code 2D décrypté, et d'autre part de la seconde clé de cryptage qui a pu être récupérée dans la base de données à partir de la première clé de cryptage, pour connaître le nombre et la position théoriques des éléments graphiques de ladite seconde signature,
- les moyens de traitement et de décodage comparent le résultat théorique (le recalcul) de la première signature et/ou de la seconde signature, avec l'image/la photographie reçue du code 2D sur lequel apparaît la première signature et/ou la seconde signature. Si le nombre et la position des éléments graphiques coïncident, au moins selon un certain pourcentage, par exemple au moins 65%, l'élément de marquage photographié est alors bien celui d'origine, l'élément de marquage est donc authentique ainsi que l'objet associé. Les moyens de traitement peuvent dans la comparaison tenir compte des paramètres relatifs à la teinte de la photographie, de la saturation des couleurs de la photographie et de la luminosité de l'éclairage lors de la prise photographique, afin de moduler le pourcentage de coïncidence.

## Revendications

1. Elément de marquage sécurisé (1) comportant un code-barres à deux dimensions (10), dit code 2D, tel qu'un QR code ou Datamatrix, qui comprend des symboles sombres (11) et clairs (12) juxtaposés, le code 2D étant crypté et comprenant au moins une signature d'authentification (3, 4) qui comporte une pluralité d'éléments graphiques (30, 40) qui sont agencés dans les symboles clairs du code 2D, et répartis de manière unique au moins spatialement et en nombre, et éventuellement diffèrent en taille et en forme géométrique, ladite au moins une signature d'authentification ayant été générée à partir d'au moins une première clé de cryptage, ledit élément de marquage sécurisé (1) comportant au moins deux signatures d'authentification (3, 4) qui sont invisibles à l'œil nu et sont destinées à être rendue visibles par la mise en œuvre d'un dispositif de révélation adapté à rendre visible chacune d'elles, ladite au moins première signature d'authentification ayant été générée à partir d'une première clé de cryptage et du code 2D non crypté, et ladite au moins seconde signature d'authentification ayant été générée à partir d'une seconde clé de cryptage et du code 2D non crypté, la seconde clé de cryptage étant liée à la première clé de cryptage de sorte que la seconde clé de cryptage n'est identifiable qu'en ayant d'abord identifié la première clé de cryptage lorsqu'il s'agit d'authentifier l'élément de marquage.

2. Elément de marquage selon la revendication dans lequel le code 2D stocke une adresse URL et un identifiant (2) se présentant sous la forme d'une chaîne de caractères, ledit identifiant permettant dans une base de données sécurisée d'identifier ladite au moins première clé de cryptage, l'identifiant pouvant en outre être destiné à être imprimé à proximité l'élément de marquage.

3. Elément de marquage selon l'une quelconque des revendications précédentes, dans lequel chaque signature d'authentification est destinée à être révélée par un dispositif de lecture distinct quant au mode de révélation, en particulier l'un des modes de révélation est la prise d'une photographie de l'élément de marquage en zoomant ensuite sur la photographie, tandis qu'un autre mode est l'agencement de l'élément de marquage sous une lumière ultraviolette.

4. Elément de marquage selon l'une quelconque des revendications précédentes, dans lequel les signatures d'authentification sont destinées à être imprimées à partir d'une encre dont la couleur rend la signature quasi-invisible ou invisible par rapport à la couleur du support sur lequel est apposé l'élément de marquage, et/ou d'une encre invisible et détectable par prise d'image photographique, et/ou par mise en lumière sous rayonnements ultraviolets.

5. Elément de marquage selon l'une quelconque des revendications précédentes, dans lequel chaque signature d'authentification (3,4) est obtenue par un algorithme de calcul qui part d'une clé de cryptage et du code 2D non crypté et génère une signature d'authentification unique.

6. Elément de marquage selon l'une quelconque des revendications précédentes, dans lequel les signatures d'authentification (3, 4) sont constituées d'une encre restant invisible lorsque l'élément de marquage (1) est photocopié.

7. Elément de marquage selon l'une quelconque des revendications précédentes, comportant en outre une étiquette électronique telle qu'une puce RFID, permettant une traçabilité de l'objet et une protection de la puce RFID par appairage des deux.

8. Elément de marquage selon l'une quelconque des revendications précédentes, dans lequel l'authentification des signatures se fait par des moyens de traitement et de décodage appropriés accessibles à partir d'une plateforme web dite de décryptage qui est connectée à un serveur hébergeant lesdits moyens de traitement et de décodage.

9. Elément de marquage selon l'une quelconque des revendications précédentes, dans lequel les éléments graphiques (30, 40) de chacune des signatures d'authentification invisibles (3, 4) sont, une fois rendus visibles pour leur authentification, d'une couleur différente pour chaque signature d'authentification.

10. Procédé de génération de l'élément de marquage sécurisé selon l'une quelconque des revendications précédentes, le procédé comportant les étapes suivantes qui sont mises en œuvre par un système d'encodage contenu sur un serveur sécurisé apte à stocker en outre une base de données :
- à chaque client voulant au moins un élément de marquage sécurisé pour apposer sur ses objets, est créée/encodée au moins une première clé de cryptage unique par client, et une seconde clé de cryptage pour chaque objet ou chaque lot d'objets, la seconde clé de cryptage étant liée à la première clé de cryptage,
- à l'aide d'un ou de plusieurs algorithmes mathématiques spécialement conçus, sont encodés avec la première clé et la seconde clé, les éléments graphiques de la première signature et de la seconde signature qui seront destinés à être imprimés de manière invisible dans les zones claires du code 2D, selon un nombre déterminé et une répartition spécifique par signature,
- est généré un code pour fournir un code 2D non crypté,
- le code 2D non crypté est ensuite crypté avec la première clé de cryptage pour générer un code 2D crypté,
- le code 2D crypté est concaténé pour construire une adresse URL intégrant en outre un identifiant qui est destiné à permettre de retrouver la première clé de cryptage lors d'une authentification ultérieure de l'élément de marquage, et
- est généré sous format électronique l'élément de marquage sécurisé tel qu'il sera à apposer, ledit élément de marquage sécurisé comprenant d'une part le code 2D crypté stockant l'adresse URL et l'identifiant, et d'autre part les signatures.

11. Procédé de génération de l'élément de marquage sécurisé selon la revendication précédente, dans lequel, une fois l'élément de marquage sécurisé généré sous format électronique, ledit élément de marquage sécurisé est enregistré sur un support électronique approprié afin de pouvoir être imprimé.

12. Procédé d'authentification de l'élément de marquage selon l'une quelconque des revendications 1 à 9 une fois apposé sur un objet, le procédé comportant les étapes de :
- l'envoi d'une image de l'élément de marquage imprimé avec la première signature d'authentification rendue visible en l'ayant scannée, à un serveur sécurisé doté de moyens de traitement et de décodage, en particulier en se connectant lors de la lecture du code 2D crypté à une adresse URL qui est incluse dans le code 2D crypté et qui est en connexion avec le serveur,
- l'analyse du code 2D crypté de l'élément de marquage pour lire un identifiant stocké dans ledit code 2D,
- l'obtention dans une base de données sécurisée du serveur d'au moins une première clé de cryptage à partir de la reconnaissance de l'identifiant,
- l'analyse de la première signature d'authentification de l'image de l'élément de marquage en identifiant au moins le nombre et l'agencement des éléments graphiques rendus visibles dans les symboles clairs du code 2D crypté,
- le décryptage à partir de la première clé de cryptage, du code 2D crypté pour fournir un code 2D décrypté,
- le calcul via un algorithme dédié d'au moins une première signature théorique d'authentification à partir du code 2D décrypté et de la première clé cryptage,
- la comparaison de la première signature théorique d'authentification à la première signature d'authentification de l'image de l'élément de marquage, l'authentification étant positive lorsque qu'au moins un certain pourcentage de coïncidence entre les éléments graphiques de la signature théorique et ceux de l'image est atteint.

13. Procédé d'authentification de l'élément de marquage (1) selon la revendication précédente, dans lequel l'authentification de la première signature est un premier niveau de vérification utilisé par une personne du grand public, qui, en scannant l'élément de marquage via son smartphone et en constatant sur l'image que la première signature d'authentification est devenue visible, peut supposer que l'élément de marquage (1), et donc l'objet associé, sont authentiques, et dans lequel l'envoi de l'image au serveur sécurisé permet de confirmer ou d'infirmer à la personne que l'objet est authentique.

14. Procédé d'authentification de l'élément de marquage (1) selon la revendication 12, comportant une vérification de second niveau qui s'adresse à un tiers devant s'identifier de manière sécurisée sur un serveur comprenant des moyens de traitement et de décodage, la vérification de second niveau comportant les étapes suivantes :
- le tiers scanne l'élément de marquage avec un dispositif de lecture dédié à lire la seconde signature d'authentification et obtenir une image de la seconde signature d'authentification rendue visible, le tiers étant autorisé à connaître le type de dispositif de lecture dédié,
- le tiers envoie l'image de la seconde signature d'authentification au serveur,
- lesdits moyens de traitement et de décodage décryptent le code 2D, refont l'algorithme de génération de la seconde signature d'authentification à partir d'une part, du code 2D décrypté incluant la première clé de cryptage, et d'autre part de la seconde clé de cryptage qui a pu être récupérée à partir de la première clé de cryptage dans une base de données stockée par le serveur, et lesdits moyens de traitement et de décodage comparent la seconde signature d'authentification recalculée à l'image de la seconde signature d'authentification de l'élément de marquage, l'authentification étant positive lorsque qu'au moins un certain pourcentage de coïncidence entre les éléments graphiques de la signature théorique et ceux de l'image est atteint.

## Patentansprüche

1. Sicheres Markierungselement (1), umfassend einen zweidimensionalen Strichcode (10), genannt 2D-Code, wie beispielsweise einen QR-Code oder eine Datamatrix, der nebeneinander dunkle (11) und helle (12) Symbole aufweist, wobei der 2D-Code verschlüsselt ist und mindestens eine Authentifizierungssignatur (3, 4) umfasst, die eine Vielzahl von grafischen Elementen (30, 40) aufweist, die in den hellen Symbolen des 2D-Codes angeordnet sind und mindestens räumlich und in Anzahl eindeutig verteilt sind und gegebenenfalls unterschiedlicher Größe und geometrischer Form sind, wobei die mindestens eine Authentifizierungssignatur anhand mindestens eines ersten Verschlüsselungsschlüssels erzeugt wurde, wobei das sichere Markierungselement (1) mindestens zwei Authentifizierungssignaturen (3, 4) aufweist, die für das bloße Auge unsichtbar und dazu bestimmt sind, durch den Einsatz einer Offenlegungsvorrichtung sichtbar gemacht zu werden, die angepasst ist, um jede davon sichtbar zu machen, wobei die mindestens erste Authentifizierungssignatur anhand eines ersten Verschlüsselungsschlüssels und des unverschlüsselten 2D-Codes erzeugt wurde, und wobei die mindestens zweite Authentifizierungssignatur anhand eines zweiten Verschlüsselungsschlüssels und des unverschlüsselten 2D-Codes erzeugt wurde, wobei der zweite Verschlüsselungsschlüssel mit dem ersten Verschlüsselungsschlüssel verknüpft ist, sodass der zweite Verschlüsselungsschlüssel nur dann identifizierbar ist, wenn bei der Authentifizierung des Markierungselements zuerst der erste Verschlüsselungsschlüssel identifiziert wurde.

2. Markierungselement nach Anspruch 1, wobei der 2D-Code eine URL-Adresse und eine Kennung (2) speichert, die sich in Form einer Zeichenkette präsentiert, wobei die Kennung es ermöglicht, in einer sicheren Datenbank den mindestens ersten Verschlüsselungsschlüssel zu identifizieren, wobei die Kennung auch möglicherweise dazu bestimmt ist, in der Nähe des Markierungselements gedruckt zu werden.

3. Markierungselement nach einem der vorhergehenden Ansprüche, wobei jede Authentifizierungssignatur dazu bestimmt ist, von einer Lesevorrichtung offengelegt zu werden, die hinsichtlich des Offenlegungsmodus verschieden ist, insbesondere einer der Offenlegungsmodi das Aufnehmen eines Fotos des Markierungselements ist, woraufhin auf das Foto gezoomt wird, während ein anderer Modus die Anordnung des Markierungselements unter ultraviolettem Licht ist.

4. Markierungselement nach einem der vorhergehenden Ansprüche, wobei die Authentifizierungssignaturen dazu bestimmt sind, anhand einer Tinte gedruckt zu werden, deren Farbe die Signatur in Bezug auf die Farbe des Trägers, auf dem sich das Markierungselement befindet, nahezu unsichtbar oder unsichtbar macht, und/oder einer unsichtbaren Tinte, die durch Aufnehmen eines fotografischen Bildes und/oder durch Hervorheben unter ultravioletter Strahlung erkannt werden kann.

5. Markierungselement nach einem der vorhergehenden Ansprüche, wobei jede Authentifizierungssignatur (3, 4) durch einen Berechnungsalgorithmus erlangt wird, der von einem Verschlüsselungsschlüssel und dem unverschlüsselten 2D-Code ausgeht und eine eindeutige Authentifizierungssignatur erzeugt.

6. Markierungselement nach einem der vorhergehenden Ansprüche, wobei die Authentifizierungssignaturen (3, 4) aus einer Tinte bestehen, die bei einem Fotokopieren des Markierungselements (1) unsichtbar bleibt.

7. Markierungselement nach einem der vorhergehenden Ansprüche, ferner aufweisend ein elektronisches Etikett, wie z. B. einen RFID-Chip, das eine Rückverfolgbarkeit des Objekts und einen Schutz des RFID-Chips durch Paarung der beiden ermöglicht.

8. Markierungselement nach einem der vorhergehenden Ansprüche, wobei die Authentifizierung der Signaturen durch geeignete Verarbeitungs- und Decodierungseinrichtungen durchgeführt wird, die anhand einer so genannten Entschlüsselungs-Webplattform zugänglich sind, die mit einem Server verbunden ist, der die Verarbeitungs- und Decodierungseinrichtungen hostet.

9. Markierungselement nach einem der vorhergehenden Ansprüche, wobei die grafischen Elemente (30, 40) von jeder der unsichtbaren Authentifizierungssignaturen (3, 4), nachdem sie für ihre Authentifizierung sichtbar gemacht wurden, für jede Authentifizierungssignatur eine andere Farbe haben.

10. Verfahren zum Erzeugen des sicheren Markierungselements nach einem der vorhergehenden Ansprüche, wobei das Verfahren die folgenden Schritte umfasst, die durch ein Codierungssystem eingesetzt werden, das auf einem sicheren Server enthalten ist, der geeignet ist, ferner eine Datenbank zu speichern:
- für jeden Kunden, der mindestens ein sicheres Markierungselement an seinen Objekten anbringen möchte, Erstellen/Codieren mindestens eines ersten Verschlüsselungsschlüssels, der für jeden Kunden eindeutig ist, und eines zweiten Verschlüsselungsschlüssels für jedes Objekt oder jede Objektcharge, wobei der zweite Verschlüsselungsschlüssel mit dem ersten Verschlüsselungsschlüssel verknüpft ist,
- unter Verwendung von einem oder mehreren speziell konzipierten mathematischen Algorithmen Codieren mit dem ersten Schlüssel und dem zweiten Schlüssel der grafischen Elemente der ersten Signatur und der zweiten Signatur, die dazu bestimmt sind, unsichtbar in den hellen Bereichen des 2D-Codes gedruckt zu werden, gemäß einer bestimmten Anzahl und einer spezifischen Verteilung pro Signatur,
- Erzeugen eines Codes, um einen unverschlüsselten 2D-Code bereitzustellen,
- anschließend Verschlüsseln des unverschlüsselten 2D-Codes mit dem ersten Verschlüsselungsschlüssel, um einen verschlüsselten 2D-Code zu erzeugen,
- Verketten des verschlüsselten 2D-Codes, um eine URL-Adresse aufzubauen, die ferner eine Kennung integriert, die dazu bestimmt ist, bei einer nachfolgenden Authentifizierung des Markierungselements das Auffinden des ersten Verschlüsselungsschlüssels zu ermöglichen, und
- Erzeugen des sicheren Markierungselements in elektronischem Format, wie es angebracht wird, wobei das sichere Markierungselement einerseits den verschlüsselten 2D-Code, der die URL-Adresse und die Kennung speichert, und andererseits die Signaturen aufweist.

11. Verfahren zum Erzeugen des sicheren Markierungselements nach dem vorhergehenden Anspruch, wobei nach Erzeugen des sicheren Markierungselements in elektronischem Format das sichere Markierungselement auf einem geeigneten elektronischen Medium aufgezeichnet wird, um gedruckt werden zu können.

12. Verfahren zum Authentifizieren des Markierungselements nach einem der Ansprüche 1 bis 9, wobei das Verfahren nach Anbringen an einem Objekt die folgenden Schritte umfasst:
- Senden eines Bilds des gedruckten Markierungselements mit der ersten Authentifizierungssignatur, die durch Scannen sichtbar gemacht wurde, an einen sicheren Server, der mit Verarbeitungs- und Decodierungseinrichtungen ausgestattet ist, insbesondere durch Verbinden beim Lesen des verschlüsselten 2D-Codes mit einer URL-Adresse, die in dem verschlüsselten 2D-Code enthalten und die mit dem Server verbunden ist,
- Analysieren des verschlüsselten 2D-Codes des Markierungselements, um eine Kennung zu lesen, die in dem 2D-Code gespeichert ist,
- Erlangen, in einer sicheren Datenbank des Servers, mindestens eines ersten Verschlüsselungsschlüssels anhand der Erkennung der Kennung,
- Analysieren der ersten Authentisierungssignatur des Bilds des Markierungselements durch Identifizieren mindestens der Anzahl und Anordnung der grafischen Elemente, die in den hellen Symbolen des verschlüsselten 2D-Codes sichtbar gemacht wurden,
- Entschlüsseln des verschlüsselten 2D-Codes anhand des ersten Verschlüsselungsschlüssels, um einen entschlüsselten 2D-Code bereitzustellen,
- Berechnen, über einen dedizierten Algorithmus, von mindestens einer ersten theoretischen Authentifizierungssignatur anhand des entschlüsselten 2D-Codes und des ersten Verschlüsselungsschlüssels,
- Vergleichen der ersten theoretischen Authentifizierungssignatur mit der ersten Authentifizierungssignatur des Bilds des Markierungselements, wobei die Authentifizierung positiv ist, wenn mindestens ein gewisser Übereinstimmungsprozentsatz zwischen den grafischen Elementen der theoretischen Signatur und denen des Bilds erreicht wird.

13. Verfahren zum Authentifizieren des Markierungselements (1) nach dem vorhergehenden Anspruch, wobei die Authentifizierung der ersten Signatur eine Verifizierung auf erster Ebene ist, die von einer Person der Allgemeinheit verwendet wird, die durch Scannen des Markierungselements über ihr Smartphone und Feststellen auf dem Bild, dass die erste Authentifizierungssignatur sichtbar geworden ist, davon ausgehen kann, dass das Markierungselement (1) und damit das zugehörige Objekt authentisch sind, und wobei das Senden des Bilds an den sicheren Server es ermöglicht, der Person zu bestätigen oder nicht zu bestätigen, dass das Objekt authentisch ist.

14. Verfahren zum Authentifizieren des Markierungselements (1) nach Anspruch 12, umfassend eine Verifizierung auf zweiter Ebene, die an einen Dritten gerichtet ist, der sich auf einem Server mit Verarbeitungs- und Decodierungseinrichtungen auf sichere Weise identifizieren muss, wobei die Verifizierung auf zweiter Ebene die folgenden Schritte umfasst:
- Scannen des Markierungselements durch den Dritten mit einer Lesevorrichtung, die dazu bestimmt ist, die zweite Authentifizierungssignatur zu lesen und ein sichtbar gemachtes Bild der zweiten Authentifizierungssignatur zu erlangen, wobei der Dritte berechtigt ist, den Typ der dedizierten Lesevorrichtung zu kennen,
- Senden des Bilds der zweiten Authentifizierungssignatur an den Server durch den Dritten,
- wobei die Verarbeitungs- und Decodierungseinrichtungen den 2D-Code entschlüsseln, den Algorithmus zum Erzeugen der zweiten Authentifizierungssignatur einerseits anhand des entschlüsselten 2D-Codes, der den ersten Verschlüsselungsschlüssel enthält, und andererseits anhand des zweiten Verschlüsselungsschlüssels, der anhand des ersten Verschlüsselungsschlüssels in einer vom Server gespeicherten Datenbank wiederhergestellt werden konnte, erneuern, und die Verarbeitungs- und Decodierungseinrichtungen die neu berechnete zweite Authentifizierungssignatur mit dem Bild der zweiten Authentifizierungssignatur des Markierungselements vergleichen, wobei die Authentifizierung positiv ist, wenn mindestens ein gewisser Übereinstimmungsprozentsatz zwischen den grafischen Elementen der theoretischen Signatur und denen des Bilds erreicht wird.

## Claims

1. Secure marking element (1) comprising a two-dimensional barcode (10), referred to as a 2D code, such as a QR code or Data Matrix, which comprises juxtaposed dark (11) and light (12) symbols, the 2D code being encrypted and comprising at least one authentication signature (3, 4) which comprises a plurality of graphic elements (30, 40) which are arranged in the light symbols of the 2D code, are uniquely distributed at least spatially and in number, and possibly differ in size and geometric shape, said at least one authentication signature having been generated from at least a first encryption key, said secure marking element (1) comprising at least two authentication signatures (3, 4) which are invisible to the naked eye and are intended to be made visible by the implementation of a revealing device suitable for making each of them visible, said at least first authentication signature having been generated from a first encryption key and the unencrypted 2D code, and said at least second authentication signature having been generated from a second encryption key and the unencrypted 2D code, the second encryption key being linked to the first encryption key so that the second encryption key is only identifiable by having first identified the first encryption key when authenticating the marking element.

2. Marking element according to claim 1, wherein the 2D code stores a URL address and an identifier (2) in the form of a character string, said identifier making it possible to identify said at least first encryption key in a secure database, it also being possible for the identifier to be printed close to the marking element.

3. Marking element according to either of the preceding claims, wherein each authentication signature is intended to be revealed by a reading device which is distinct as to the mode of revelation, and in particular one of the modes of revelation is the taking of a photograph of the marking element and subsequently zooming in on the photograph, while another mode is the arrangement of the marking element under ultraviolet light.

4. Marking element according to any of the preceding claims, wherein the authentication signatures are intended to be printed with an ink of which the color renders the signature almost invisible or invisible with respect to the color of the support on which the marking element is affixed, and/or an invisible ink which can be detected by taking a photographic image and/or by illumination under ultraviolet rays.

5. Marking element according to any of the preceding claims, wherein each authentication signature (3, 4) is obtained by a calculation algorithm which starts from an encryption key and the unencrypted 2D code and generates a unique authentication signature.

6. Marking element according to any of the preceding claims, wherein the authentication signatures (3, 4) consist of ink which remains invisible when the marking element (1) is photocopied.

7. Marking element according to any of the preceding claims, further comprising an electronic tag such as an RFID chip, which allows traceability of the object and protection of the RFID chip by pairing the two.

8. Marking element according to any of the preceding claims, wherein the authentication of the signatures is carried out by appropriate processing and decoding means which can be accessed from a so-called decryption web platform which is connected to a server hosting said processing and decoding means.

9. Marking element according to any of the preceding claims, wherein the graphic elements (30, 40) of each of the invisible authentication signatures (3, 4) are, when made visible for their authentication, in a different color for each authentication signature.

10. Method for generating the secure marking element according to any of the preceding claims, the method comprising the following steps which are implemented by an encoding system contained on a secure server capable of further storing a database:
- for each customer wanting at least one secure marking element to affix to its objects, at least a first encryption key unique to each customer is created/encoded, and a second encryption key is created/encoded for each object or each batch of objects, the second encryption key being linked to the first encryption key,
- using one or more specially designed mathematical algorithms, the graphic elements of the first and the second signatures are encoded with the first and the second key and are intended to be printed invisibly in the clear areas of the 2D code in a specific number and distribution per signature,
- a code is generated to provide an unencrypted 2D code,
- the unencrypted 2D code is then encrypted with the first encryption key to generate an encrypted 2D code,
- the encrypted 2D code is concatenated to construct a URL address further incorporating an identifier which is intended to make it possible to retrieve the first encryption key during a subsequent authentication of the marking element, and
- the secure marking element is generated in electronic format, in the manner in which it will be affixed, said secure marking element comprising both the encrypted 2D code storing the URL address and the identifier, and the signatures.

11. Method for generating the secure marking element according to the preceding claim, wherein once the secure marking element has been generated in electronic format, said secure marking element is recorded on an appropriate electronic medium so that it can be printed.

12. Method for authenticating the marking element according to any of claims 1 to 9 once affixed to an object, the method comprising the steps of:
- sending an image of the printed marking element with the first authentication signature made visible by having scanned it, to a secure server equipped with processing and decoding means, in particular by connecting, when reading the encrypted 2D code, to a URL address which is included in the encrypted 2D code and which is connected to the server,
- analyzing the encrypted 2D code of the marking element to read an identifier stored in said 2D code,
- obtaining, in a secure database of the server, at least a first encryption key from the recognition of the identifier,
- analyzing the first authentication signature of the image of the marking element by identifying at least the number and arrangement of the graphic elements made visible in the clear symbols of the encrypted 2D code,
- decrypting the encrypted 2D code using the first encryption key to provide a decrypted 2D code,
- calculating, via a dedicated algorithm, at least a first theoretical authentication signature from the decrypted 2D code and the first encryption key,
- comparing the first theoretical authentication signature with the first authentication signature of the image of the marking element, the authentication being positive when at least a certain percentage of coincidence between the graphic elements of the theoretical signature and those in the image is achieved.

13. Method for authenticating the marking element (1) according to the preceding claim,
wherein the authentication of the first signature is a first level of verification used by a person of the general public, who, by scanning the marking element via their smartphone and noting in the image that the first authentication signature has become visible, can assume that the marking element (1), and therefore the associated object, are authentic, and wherein sending the image to the secure server confirms or denies to the person that the object is authentic.

14. Method for authenticating the marking element (1) according to claim 12, comprising a second-level verification which is addressed to a third party having to identify themselves in a secure manner on a server comprising processing and decoding means, the second-level verification comprising the following steps:
- the third party scans the marking element with a reading device dedicated to reading the second authentication signature and obtaining an image of the second authentication signature which has been made visible, the third party being authorized to know the type of dedicated reading device,
- the third party sends the image of the second authentication signature to the server,
- said processing and decoding means decrypt the 2D code, reconfigure the algorithm for generating the second authentication signature from the decrypted 2D code including the first encryption key and from the second encryption key which could be retrieved from the first encryption key in a database stored by the server, and said processing and decoding means compare the recalculated second authentication signature with the image of the second authentication signature of the marking element, the authentication being positive when at least a certain percentage of coincidence between the graphic elements of the theoretical signature and those in the image is achieved.
